Europäisches Patentamt

European Patent Office

Office européen des brevets

(19)

(11) Veröffentlichungsnummer: **0 489 254 A2**

# (12) EUROPÄISCHE PATENTANMELDUNG

(21) Anmeldenummer: **91118226.9**

(22) Anmeldetag: **25.10.91**

(51) Int. Cl.5: **B29C 45/22**, B29C 45/16

(30) Priorität: **03.12.90 DE 4038492**

(43) Veröffentlichungstag der Anmeldung:
**10.06.92 Patentblatt 92/24**

(84) Benannte Vertragsstaaten:
**AT BE CH DE DK ES FR GB GR IT LI LU NL SE**

(71) Anmelder: **PEGUFORM-WERKE GMBH**
**Schlossmattenstrasse 18**
**W-7805 Bötzingen am Kaiserstuhl(DE)**

(72) Erfinder: **Klemm, Walter**
**Weberwiesen 6**
**W-3404 Adelebsen, OT Lödingsen(DE)**

(74) Vertreter: **Blumbach Weser Bergen Kramer**
**Zwirner Hoffmann Patentanwälte**
**Sonnenberger Strasse 100**
**W-6200 Wiesbaden(DE)**

(54) **Spritzkopf.**

(57) Es wird ein Spritzkopf für eine Kunststoff-Spritzgußmaschine beschrieben, der mittels eines Anschlußflansches (3) an der Spritzgußmaschine befestigbar ist und statt nur einer Spritzdüse (11) wenigstens eine weitere Spritzdüse (12) aufweist. Mittels eines Umschaltventils (7) kann der schmelzflüssige Kunststoff zur ersten oder zweiten Spritzdüse (11, 12) geleitet werden, so daß Spritzgußformen zur Herstellung zweilagiger Kunststoffteile oder auch Doppelformen mit einer normalen, nur mit einer Spritzeinheit versehenen Spritzgußmaschine versorgt werden können. Dadurch ist auch das Einfahren neuer Spritzgußformen für zweilagige Kunststoffteile mit einer einfachen Spritzgußmaschine möglich.

EP 0 489 254 A2

Die Erfindung betrifft einen Spritzkopf für Kunststoff-Spritzgußmaschinen nach dem Oberbegriff des Anspruchs 1.

Zur Herstellung zweilagiger Kunststoffteile müssen in die jeweilige Spritzgußform zwei Materialströme aus schmelzflüssigem Kunststoff gleichzeitig oder nacheinander eingeführt werden. Dazu sind dann Spritzgußmaschinen mit zwei Spritzeinheiten erforderlich. Das bedingt einen sehr hohen Aufwand. Auch beim Einfahren neuer Spritzgußformen für zweilagige Kunststoffteile sind dann Spritzgußmaschinen mit zwei Spritzeinheiten erforderlich, die für die normale Produktion dann nicht zur Verfügung stehen.

Der Erfindung liegt demgemäß die Aufgabe zugrunde, einen Spritzkopf zur Verfügung zu stellen, der den Aufwand bei der Herstellung zweilagiger Kunststoffteile wesentlich verringert. Die Lösung der Aufgabe ist im Anspruch 1 angegeben. Durch die Umsteuerung des schmelzflüssigen Kunststoffstroms auf zwei Spritzdüsen sind nicht mehr zwei Spritzeinheiten erforderlich. Es besteht außerdem auch die Möglichkeit, den Spritzguß in Verbindung mit Doppelformen zu verwenden, also abwechselnd gleiche oder auch unterschiedliche Teile in einer Doppelform zu spritzen. Gegebenenfalls läßt sich die erfindungsgemäße Lösung auch auf Spritzköpfe ausdehnen, die mehr als zwei Spritzdüsen besitzen. Das Umschaltventil muß dann so ausgebildet sein, daß wahlweise jede Spritzdüse versorgt werden kann.

Weiterbildungen der Erfindung sind Gegenstand der Unteransprüche. So kann vorgesehen sein, daß das Umschaltventil ein Kolbenschieber mit zwei Durchgängen ist, die wahlweise einen vom Anschlußflansch des Spritzkopfes ankommenden Eingangskanal mit einem von zwei Ausgangskanälen verbinden, die zu den beiden Spritzdüsen führen. Ein solches Kolbenschieberventil arbeitet sehr präzise auch bei den auftretenden hohen Drücken im Bereich von 300 bar oder mehr. Die Umsteuerung des Kolbenschiebers erfolgt zweckmäßig durch zwei an seinen Enden angreifende Fluidzylinder, die den Kolbenschieber sehr genau so einstellen können, daß die Durchgänge mit den jeweiligen Kanälen exakt fluchten. Dadurch werden Scherungen des Materialflusses und damit eine Schlierenbildung vermieden.

Für die praktische Verwirklichung kann in vorteilhafter Weise vorgesehen sein, daß eine Spritzdüse zusammen mit ihrem Ausgangskanal fluchtend mit dem Eingangskanal in Axialrichtung des Spritzkopfes angeordnet ist. Die zweite Spritzdüse befindet sich im Abstand von der Achse des Spritzkopfes. Der Kolbenschieber ist unter einem von 90° gegen die Achse abweichenden Winkel abgeordnet und besitzt einen ersten Durchgang, der in Axialrichtung des Spritzkopfes verläuft und in einer Kolbenschieberstellung den Eingangskanal einerseits und den Ausgangskanal der einen Spritzdüse andererseits verbindet. Ein zweiter Durchgang des Kolbenschiebers verbindet in der anderen Kolbenschieberstellung den Eingangskanal mit dem schräg zur Achse des Spritzkopfes verlaufenden Ausgangskanal, der zur zweiten Spritzdüse führt.

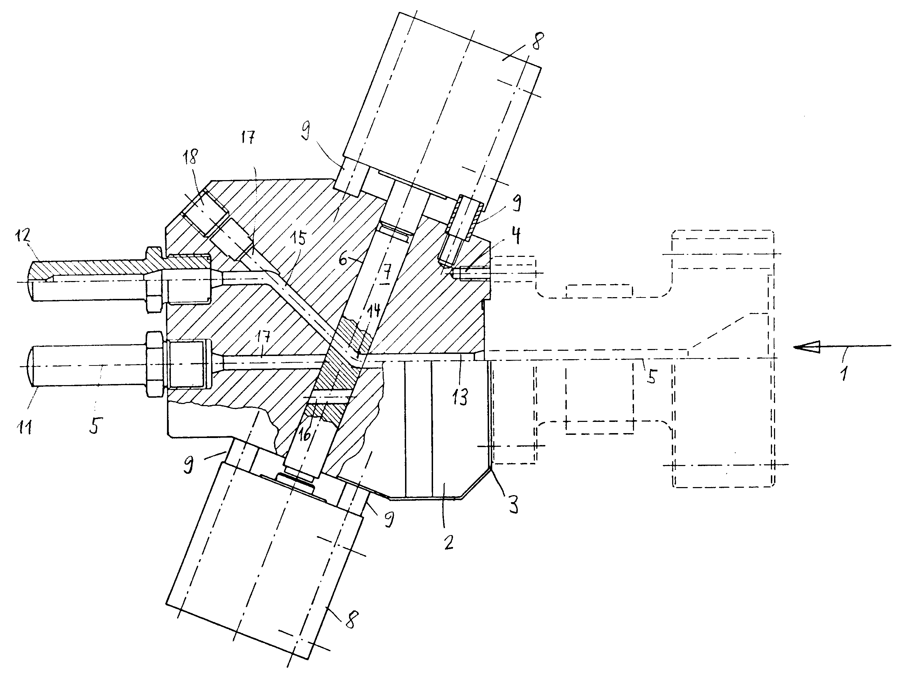

Nachfolgend wird ein Ausführungsbeispiel in Verbindung mit der Zeichnung beschrieben, die eine teilweise geschnittene Seitenansicht des Spritzkopfes zeigt.

In der Zeichnung ist auf der rechten Seite schematisch und gestrichelt der Ausgang einer Spritzgußmaschine dargestellt, wobei der Pfeil 1 den ankommenden Materialstrom symbolisiert. An die spritzgußmaschine ist der Spritzkopf 2 mit einem Anschlußflansch 3 angeschraubt. Zur Vereinfachung ist nur eine Schraube 4 angedeutet.

Durch den Spritzkopf 2 führt unter einem Winkel von 67,5° zur Achse 5 des Spritzkopfes eine Bohrung 6, die einen Kolbenschieber 7 aufnimmt. Der Kolbenschieber läßt sich mit zwei Hydrozylindern 8 aus der dargestellten unteren Endlage in eine obere Endlage und umgekehrt umsteuern. Dabei werden die beiden Endlagen auf nicht dargestellte Weise abgetastet, so daß eine genaue Einstellung möglich ist. Die Befestigung der Hydrozylinder 8 am Spritzkopf 2 erfolgt über wärmeisolierende Distanzbuchsen 9, die zu hohe Temperaturen der Hydrozylinder 8 vermeide. Der gesamte Spritzkopf 2 wird nämlich mit Hilfe nicht dargestellter Heizelemente und Temperaturfühler auf einer für das Kunststoffmaterial ausreichend hohen, konstanten Temperatur gehalten. Abstrahlverluste lassen sich durch Dämmplatten (nicht dargestellt) vermeiden.

Auf der Stirnfläche 10 des Spritzkopfes 2 sind zwei Spritzdüsen 11, 12 durch Einschrauben befestigt. In der dargestellten Position des Kolbenschiebers 7 fließt der schmelzflüssige Kunststoff vom Eingangskanal 13 über einen abgewinkelten Durchgang 14 des Kolbenschiebers 7 und einen Ausgangskanal 15 zur Spritzdüse 12. Wenn der Kolbenschieber 7 in die andere, obere Endlage umgesteuert wird, verbindet ein Durchgang 16 den Eingangskanal 13 mit einem Ausgangskanal 17, der zur Einspritzdüse 11 führt. Diese und der Ausgangskanal 17 sowie auch die Spritzdüse 11 sind fluchtend zur Achse 5 des Spritzkopfes 2 (und der Spritzgußmaschine) angeordnet.

Zur Herstellung des Ausgangskanals 15 dient eine Bohrung 17, die später mit einem Stopfen 18 verschlossen wird. Damit diese Bohrung 17 und damit der Ausgangskanal 15 ohne Kollision mit den übrigen Teilen des Spritzkopfes 2 angebracht werden kann, ist die Bohrung 6 für den Kolbenschieber 7 abweichend von 90° zur Achse 5, nämlich im Ausführungsbeispiel unter einem Winkel von 67,5°, angeordnet. Dieser Winkel ermöglicht die kleinste Bauweise.

**Patentansprüche**

1. Spritzkopf für eine Kunststoff-Spritzgußmaschine mit einem Anschlußflansch (3) für die Spritzgußmaschine und einer Spritzdüse (11) zum Anschluß an ein Spritzgußwerkzeug, dadurch gekennzeichnet, daß der Spritzkopf (2) wenigstens eine zweite Spritzdüse (12) sowie ein Umschaltventil (7) aufweist, das die wahlweise Zufuhr des schmelzflüssigen Kunststoffes von der Spritzgußmaschine zu der ersten oder zweiten Spritzdüse (11, 12) ermöglicht.

2. Spritzkopf nach Anspruch 1, dadurch gekennzeichnet, daß das Umschaltventil ein Kolbenschieber (7) mit zwei Durchgängen (14, 16) ist, die wahlweise einen vom Anschlußflansch (3) ankommenden Eingangskanal (13) mit einem von zwei Ausgangskanälen (15, 17) verbinden, die zu den beiden Spritzdüsen (11, 12) führen.

3. Spritzkopf nach Anspruch 2, dadurch gekennzeichnet, daß der Kolbenschieber (7) durch zwei an seinen Enden angreifende Fluidzylinder (8) umsteuerbar ist.

4. Spritzkopf nach Anspruch 2 oder 3, dadurch gekennzeichnet, daß eine Spritzdüse (11) zusammen mit ihrem Ausgangskanal (17) fluchtend mit dem Eingangskanal (13) in Axialrichtung (5) des Spritzkopfes (2) und die zweite Spritzdüse (12) im Abstand von der Achse (5) angeordnet sind, und daß der Kolbenschieber (7) unter einem von 90° gegen die Achse (5) abweichenden Winkel angeordnet ist und einen ersten, in Axialrichtung des Spritzkopfes (2) verlaufenden Durchgang (16) besitzt, der in einer Kolbenschieberstellung den Eingangskanal (13) und den Ausgangskanal (17) der einen Spritzdüse (11) verbindet, und einen zweiten Durchgang (14), der in der anderen Kolbenschieberstellung den Eingangskanal (13) mit dem schräg zur Achse (5) des Spritzkopfes (2) verlaufenden, zur zweiten Spritzdüse (12) führenden Ausgangskanal (15) verbindet.

5. Spritzkopf nach Anspruch 4, dadurch gekennzeichnet, daß der Winkel im Bereich zwischen 60 und 75° liegt.